# EUROPÄISCHE PATENTSCHRIFT

(11) **EP 3 449 786 B1**
(45) Veröffentlichungstag und Bekanntmachung des Hinweises auf die Patenterteilung: **17.03.2021**
(21) Anmeldenummer: 18192097.6
(22) Anmeldetag: 31.08.2018
(51) Int. Cl.: A47J 37/06

(54) **ELEKTRISCHES TISCHRACLETTEGERÄT**
ELECTRIC TABLE RACLETTE APPARATUS
APPAREIL À RACLETTE DE TABLE ÉLECTRIQUE

(30) Priorität: 31.08.2017 DE 202017105274 U
(43) Veröffentlichungstag der Anmeldung: 06.03.2019
(73) Patentinhaber: Gastroback GmbH, 21279 Hollenstedt (DE); Kirschenmann, Andreas, 21279 Hollenstedt (DE)
(72) Erfinder: KIRSCHENMANN, Andreas, 21279 Hollenstedt (DE)
(74) Vertreter: Müller Schupfner & Partner Patent- und Rechtsanwaltspartnerschaft mbB

(56) Entgegenhaltungen:
- EP-A1- 0 811 346
- DE-A1- 19 638 862
- US-A- 4 062 275
- US-A1- 2005 189 341

## Beschreibung

Die Erfindung betrifft ein elektrisches Tischraclettegerät mit über einem Freiraum für Raclettepfannen angeordneter Grillplatte, wobei die Grillplatte ein Heizelement umfasst und Grillplatte und Heizelement als eine Einheit gemeinsam abnehmbar sind.

### Stand der Technik

Tischraclettegeräte sind aus dem Stand der Technik bekannt. Ein herkömmliches Tischraclettegerät weist, in oder unter einem metallischen Deckel angeordnet, ein Heizelement auf, welches durch direkte Wärmeabgabe und durch Reflexion der Wärme an dem Deckel, in kleinen, unterhalb des Deckels angeordneten Raclettepfannen Nahrungsportionen erwärmt und insbesondere Käseportionen zum Schmelzen bringt. Mit diesen herkömmlichen Tischraclettegeräten lassen sich jedoch meistens keine Speisen auf andere Art zubereiten.

In einer verbesserten Ausführung besitzt das Tischraclettegerät anstelle des Deckels eine Grillplatte, die über einem i.d.R. als Heizwendel ausgeführten Heizelement angeordnet ist und einen weiteren Einsatz des Geräts ermöglicht, jedoch zu zusätzlichen Verschmutzungen führt, welche nur schwierig von Hand zu reinigen sind.

Diese Geräte lassen sich aus Sicherheitsgründen nicht in Wasser oder mit Wasserüberschuss reinigen, insbesondere sind sie nicht für die Reinigung in einer Geschirrspülmaschine geeignet. Ein weiterer Nachteil ist der relativ große Raumbedarf dieser Geräte beim Verstauen im Küchenschrank, da sich die Grillplatte nicht abnehmen lässt.

In der EP 1396219 A1 ist ein Tischraclettegerät beschrieben mit einer Grundplatte und einer darüber befindlichen Grillplatte, wobei die Grundplatte und die Grillplatte über eine Mehrzahl schwenkbarer Verbindungselemente miteinander verbunden sind und sich das Tischraclettegerät nach dem Gebrauch zusammenklappen lässt. Ein umlaufender Heizstab ist unterhalb der Grillplatte angebracht.

Es sind des weiteren Tischraclettegerät bekannt mit einer abnehmbaren Grillplatte. Allerdings verbleibt hier nach Abnahme der Grillplatte die Heizwendel am Grundkörper fest montiert zurück und i.d.R. auch ein umlaufender Rahmen zur Aufnahme der Grillplatte oder Grillplatten. Diese Geräte sind schwierig zu reinigen, insbesondere im Bereich des Freiraums für die Raclettepfannen z.B. die Fläche, auf der die Raclettepfannen abgestellt werden.

Ein weiterer Nachteil der aus dem Stand der Technik bekannten Tischraclettegeräte ist, dass aufgrund der Beabstandung von Heizelement und Grillplatte zumindest die Wärmeübertragung von dem Heizelement auf die Grillplatte schlecht ist und im Weiteren sich die Wärme ungleichmäßig in dem Raum verteilt, wo die Raclettepfannen angeordnet sind.

### Aufgabe der Erfindung

Aufgabe der vorliegenden Erfindung ist es demnach, ein Tischraclettegerät zur Verfügung zu stellen, welches die aus dem Stand der Technik bekannten Nachteile nicht aufweist, insbesondere die Wärmeübertragung verbessert sowie eine Vereinfachung der Reinigung des gesamten Geräts ermöglicht, auch hinsichtlich der Zugänglichkeit der reinigungsbedürftigen Stellen.

### Zusammenfassung der Erfindung

Diese und weitere Aufgaben werden durch ein Tischraclettegerät gemäß Patentanspruch 1 gelöst. Vorteilhafte Ausgestaltungen und Weiterbildungen ergeben sich aus den abhängigen Patentansprüchen oder sind nachstehend beschrieben.

Das erfindungsgemäße Tischraclettegerät ist dadurch gekennzeichnet, dass die Grillplatte zusammen mit dem Heizelement abnehmbar ist und hierbei die elektrische Verbindung zwischen Heizelement einerseits und Stromversorgung andererseits bzw. Regeleinheit und Stromversorgung andererseits gelöst wird.

Überraschend wurde gefunden, dass durch die Integration des Heizelements in oder auf der Unterseite der Grillplatte die Wärmeübertragung auf die Grillplatte verbessert werden kann. Dies führt zu einer gleichmäßigeren Wärmeverteilung auf der Grillplatte und damit auch zu einer verbesserten Wärmeverteilung auf die darunter befindlichen Raclettepfannen.

Weiterhin lässt sich das Tischraclettegerät aufgrund der abnehmbaren Grillplatte einfach reinigen und dadurch, dass die Grillplatte samt des Heizelements abnehmbar ist, platzsparend im Küchenschrank verstauen.

Das erfindungsgemäße Tischraclettegerät umfasst zumindest einen Grundkörper und zumindest zwei vom Grundkörper nach oben abstehende Tragarme, auf welchen eine Grillplatte aufliegt, wobei die Grillplatte an der Unterseite ein Heizelement aufweist. Grundkörper und Grillplatte definieren einen Freiraum für das Einschieben der Raclettepfannen. Der Grundkörper weist zumindest einen Schalter auf, mit welchem die Temperatur der unterschiedlichen Heizorgane (vorzugsweise getrennt voneinander) eingeschaltet werden kann.

Die Raclettepfannen liegen nach einer Ausführungsform auf der Oberseite des Grundkörpers auf. Die Auflagefläche für die Raclettepfannen kann teflonbeschichtet sein.

Nach einer bevorzugten Ausgestaltung weist der Grundkörper eine Heizplatte auf, auf der ein Fonduetopf erwärmt werden kann. Wenn das Gerät gleichzeitig als Raclette- und als Fonduegerät, als Grill(/Brat)- und als Fonduegerät oder als Grill(/Brat)-, Raclette- und als Fonduegerät betrieben werden soll, ist es zweckmäßig, wenn die abnehmbare Grillplatte mit dem Heizelement eine Ausnehmung aufweist, durch die der Fonduetopf hindurchreicht und die Ausnehmung insbesondere etwa die Größe des Fonduetopfes in der relevanten Höhe hat (umlaufend oder stellenweise), damit der Fonduetopf gleichzeitig sicher auf der Heizplatte gehalten ist. Insbesondere ist die Ausnehmung rund.

### Detaillierte Beschreibung der Erfindung

Der Grundkörper des Tischraclettegerätes kann bspw. eine runde Form oder eine rechteckige bzw. quadratische Form haben. Vorzugsweise ist dieser rechteckig.

In einer Ausgestaltung weist der Grundkörper zumindest einen Drehregler auf, mit welchem die Temperatur der unterschiedlichen Heizorgane (vorzugsweise getrennt voneinander) geregelt bzw. eingeschaltet werden kann, vorzugsweise zwei Drehregler, die einerseits jeweils das Heizelement und die Heizplatte einschalten und andererseits dessen/deren Temperatur getrennt einstellen lassen. Weiterhin befindet sich am Grundkörper ein Stromstecker oder eine Zuleitung, über welche(n) das Tischraclettegerät mit elektrischer Energie versorgt wird. Im Grundkörper ist vorzugsweise zumindest eine Regeleinheit, vorzugsweise zwei, zum Regulieren des Heizstroms und damit der Temperatur a) des zumindest einen Heizelements in oder an der Grillplatte und / oder b) der Heizplatte für den Fonduetopf vorgesehen.

Die Oberseite des Grundkörpers weist vorzugsweise eine oder mehrere Mulden auf, die die Raclettepfannen auf der Oberseite positionieren, zumindest hinsichtlich des Herausfallens nach vorne bzw. des ungewollten Durchrutschens nach hinten, so dass die Raclettepfannen im Ergebnis vorne in einer Linie fluchten. Diese Lösung ist besonders praktisch, da sie Kollisionen zwischen einzelnen Pfannen verhindert und nach einer bevorzugten Ausführungsform jeder Raclettepfanne eine Einschiebeposition zuordnet. Die Oberseite des Grundkörpers ist vorzugsweise aus Chromstahl hergestellt. Eine Mulde für eine Raclettepfanne kann zusätzlich zwischen den Schenkeln des/der Tragarme vorgesehen werden.

Ebenso ist es möglich, die Raclettepfannen zum Garen auf einem Tablett als Zwischenboden anzuordnen, das im Freiraum und zwar über dem Grundkörper vorgesehen ist, so dass unter dem Tablett ein weiterer Freiraum zum Warmhalten der Raclettepfannen bereitgestellt wird. Bei dieser Ausführungsform sind die Mulden ggf. zusätzlich auf dem Tablett angeordnet.

Der Grundkörper weist insbesondere zwei sich gegenüberliegende, vom Grundkörper nach oben abstehende Tragarme auf, auf welche die Grillplatte aufgelegt ist. Der Grundkörper und die Grillplatte sind dabei durch die Tragarme zumindest so weit voneinander beabstandet, dass Raclettepfannen zwischen Grundkörper und Grillplatte platziert werden können. Die Tragarme haben die Funktion einer Stütze und tragen die Grillplatte, nicht aber unmittelbar das Heizelement. Das Heizelement wird wiederum von der Grillplatte getragen. Vorzugsweise stellt zumindest ein Tragarm gleichzeitig die Stromversorgung für das Heizelement in oder unter der Grillplatte bereit.

In einer Ausgestaltung weist zumindest einer der Tragarme den weiblichen Teil eines elektrischen Steckverbinders auf, wobei sich der männliche Teil des elektrischen Steckverbinders an der Grillplatte befindet. Auch ist es möglich, dass zumindest ein Tragarm den männlichen Teil eines elektrischen Steckverbinders bildet und der dazugehörige weibliche Teil sich an der Grillplatte befindet. Bevorzugt befindet sich der männliche Teil eines elektrischen Steckverbinders an der Grillplatte. Auch unabhängig hiervon kann weiterhin eine der Steckverbindungen sich in einem Tragarm und die zugehörige weitere Steckverbindung für die andere Phase sich in einem anderen Tragarm befinden.

In einer weiteren bevorzugten Form weist jeder der Tragarme weiterhin zumindest eine Ausnehmung auf, in welche an der Grillplatte befindliche Dornen eingreifen. Dies dient einer erhöhten Stabilität bei einer einseitigen Lastenverteilung und verhindert so zum Beispiel, dass die Grillplatte beim einseitigen Bestücken mit Grill oder Bratgut sich zu der schwereren Seite neigt oder verrutscht.

Insbesondere weist zumindest ein Dorn Rastmulden auf, z.B. ringförmig, so dass zumindest eine federbelastete bewegliche Rastnase in der Ausnehmung, die z.B. als Hülse ausgeführt sein kann, den Dorn festsetzt, wenn der Dorn tief genug in die Ausnehmung hineingreift.

Weiter bevorzugt weist einer der Tragarme einen Sicherheitsschalter, z.B. in Form eines federbelasteten Schalters auf, der bei Niederdrücken die Stromzufuhr für die Kontaktstelle im Tragarm bereitstellt oder den Stromkreis anderweitig schließt (etwa über ein Relais). Der Sicherheitsschalter dient der Sicherheit des Benutzers. Nur bei niedergedrücktem Sicherheitsschalter kann der Stromkreislauf (der das Heizelement bzw. die Heizwendel durchfließt) geschlossen werden. Wird der Sicherheitsschalter mit der Grillplatte belastet, weil diese regelgerecht auf die Tragarme aufgesetzt ist, wird der Stromkreis geschlossen. Wird die Grillplatte abgenommen, drückt die Federkraft die Erhebung, die als Schalter fungiert, nach oben und unterbricht den Stromkreis.

Nach einer Ausführungsform wird der Stromkreis über den Sicherheitsschalter geschlossen, erst wenn die Grillplatte aufliegt oder sich kurz über der eigentlichen Auflage der Grillplatte auf den Tragarmen befindet (z.B. 1 - 3 mm) und die Grillplatte den Steckverbinder noch verdeckt. Andererseits wird der Stromkreis unterbrochen, wenn die Grillplatte von der Auflage auf den Tragarmen abgehoben wird (z.B. um 3 - 6 mm), die Grillplatte den Steckverbinder aber noch verdeckt und insbesondere Steckerstifte und Buchse noch stromschlüssig verbunden sind.

Die Grillplatte weist an der Unterseite zumindest ein Heizelement, bevorzugt in Form einer Heizwendel, auf, wobei das Heizelement zumindest teilweise in die Grillplatte integriert ist und so in direktem Kontakt mit der Grillplatte steht. Die Grillplatte ist bevorzugt metallisch; alternativ lässt sich z.B. auch eine Steinplatte benutzen. Auch kann die Grillplatte auf einer oberen Teilfläche aus Metall und auf der anderen oberen Teilfläche aus Stein bestehen. Die Grillplatte kann hierzu zweiteilig ausgeführt sein, wobei die Teile dann miteinander zu einer Grillplatte verkettbar sind und z.B. ein Teil als Steinplatte und ein Teil als Metallplatte ausgeführt ist.

Es wurde überraschenderweise gefunden, dass durch die erfindungsgemäße Anordnung eine bessere Wärmeübertragung des Heizelements auf die Grillplatte im Wesentlichen durch Wärmeleitung ermöglicht wird, was auch zu einer besseren Wärmeverteilung in der Grillplatte führt und gleichzeitig eine gleichmäßigere Wärmeabgabe durch Wärmestrahlung auf die unterhalb der Grillplatte befindlichen Raclettepfannen ermöglicht.

In einer bevorzugten Ausgestaltung ist das Heizelement in einer Nut der Grillplatte unterhalb derselben angeordnet. An einer Stelle weist die Grillplatte, wie bereits beschrieben, zumindest einen Teil des elektrischen Steckverbinders auf, bevorzugt den männlichen Teil eines elektrischen Steckverbinders, welcher sich bevorzugt an einem äußeren Bereich der Grillplatte befindet. Über den elektrischen Steckverbinder wird das in oder unterhalb an der Grillplatte befindliche Heizelement, welches bevorzugt eine nach dem Prinzip des Heizwiderstandes operierende Heizwendel ist, nach dem Verbinden mit dem jeweiligen in zumindest einem Tragarm befindlichen Gegenstück mit Strom versorgt.

Die Grillplatte weist in einer Ausführungsform zumindest zwei Handgriffe auf, an welcher sich die Grillplatte samt des Heizelements von den Tragarmen abnehmen bzw. auf die Tragarme aufsetzen lässt. Bevorzugt ist, dass sich der zumindest eine an der Grillplatte befindliche elektrische Steckverbinder leicht versetzt neben einem Handgriff befindet.

Nach einer Ausgestaltung weist zumindest einer der Tragarme auf der Oberseite zumindest eine Ausnehmung in Form eines Lochs oder einer Hülse auf, in welches/welche ein Dorn von der Unterseite der Grillplatte eingreifen kann. Dies dient einer verbesserten Stabilität der auf den Tragarmen aufliegenden Grillplatte und der Führung der Grillplatte beim Aufbringen.

In einer bevorzugten Ausgestaltung weist das elektrische Tischraclettegerät zusätzlich eine Fonduefunktion auf. In dieser Ausgestaltung ist es möglich, sowohl die Raclette- als auch die Fonduefunktion parallel zu betreiben. Dafür weist der Grundkörper in etwa mittig eine Heizplatte auf, welche einen darüber befindlichen Fonduetopf erhitzen kann. In dieser Ausführung befindet sich mittig in der Grillplatte eine Ausnehmung, durch welche der Boden des Fonduetopfes auf die Heizplatte aufgelegt bzw. aufgestellt werden kann. Die Halterung für die Heizplatte springt ausgehend von der Oberseite des Grundkörpers bevorzugt unten zunächst zurück, um ausreichend Platz für die Raclettepfannen zu bieten, wobei sich dann die Heizplatte über der Ebene der Pfannen befindet (aber immer noch unter der Ebene der Grillplatte) und die Heizplatte dort eine größere Ausdehnung, insbesondere einen größeren Durchmesser, als die zurückspringende Halterung hat.

In dieser Ausgestaltung weist der Grundkörper zumindest einen Drehregler auf, insbesondere zwei Drehregler mit welchen sich die Temperaturen des Heizelementes für die Grillplatte und der Heizplatte für den Fonduetopf separat regulieren lassen.

Im Weiteren kann eine Elektronik vorgesehen sein, die, wenn der Drehregler für die Grillplatte auf "0" gestellt ist, den Steckverbinder vollständig stromlos stellt. Auch unabhängig hiervon kann eine Elektronik vorgesehen sein, die den Steckverbinder bzw. die Buchse stromlos stellt, wenn an diesem keine Last anliegt, weil z.B. die Grillplatte mit dem Heizelement nicht aufgesetzt ist (etwa weil nur das Raclette betrieben wird).

Es ist ebenfalls möglich, anstelle der Grillplatte eine Haltevorrichtung für den Fonduetopf auf die am Grundkörper befindlichen Tragarme aufzusetzen. In dieser Ausgestaltung kann das Tischraclettegerät dann ausschließlich als elektrisches Fonduegerät genutzt werden. Solch eine Haltevorrichtung besteht im einfachsten Fall aus einem Metallgestell, welches an und zwischen den gegenüberliegenden Tragarmen angeordnet wird und welches über der Heizplatte eine Ausnehmung für den Fonduetopf aufweist, die den Fonduetopf zumindest umläuft und sicher auf der Heizplatte positioniert. Vorzugsweise sind Heizplatte, Boden des Fonduetopfes und Ausnehmung rund.

Ein Ausführungsbeispiel eines erfindungsgemäßen Tischraclettegerätes mit Fonduefunktion wird nachstehend genauer anhand der Figuren beschrieben, ohne dass die Erfindung auf die beschriebene Ausgestaltung beschränkt wäre. Es zeigen:
Fig.1 die seitliche Draufsicht auf ein erfindungsgemäßes Tischraclettegerät mit zusätzlicher Fonduefunktion;
Fig. 2, Fig. 3 und Fig. 4 die Vorder-, Seiten- bzw. Draufansicht des erfindungsgemäßen Tischraclettegerätes nach Fig. 1;
Fig. 5 die seitliche Draufsicht auf den Grundkörper des erfindungsgemäßen Tischraclettegerätes von Fig. 1 mit abgenommener Grillplatte und ohne Fonduetopf,
Fig. 6 die seitliche Draufsicht auf eine Grillplatte mit zwei Handgriffen;
Fig. 7 die Unteransicht der Grillplatte von Fig. 6;
Fig. 8 die Seitenansicht der Grillplatte von Fig. 6.
Fig. 9 eine seitliche Sicht auf den seitlich geöffneten Tragarm mit elektrischem Steckverbinder, eingerastetem Dorn und Temperaturfühler.

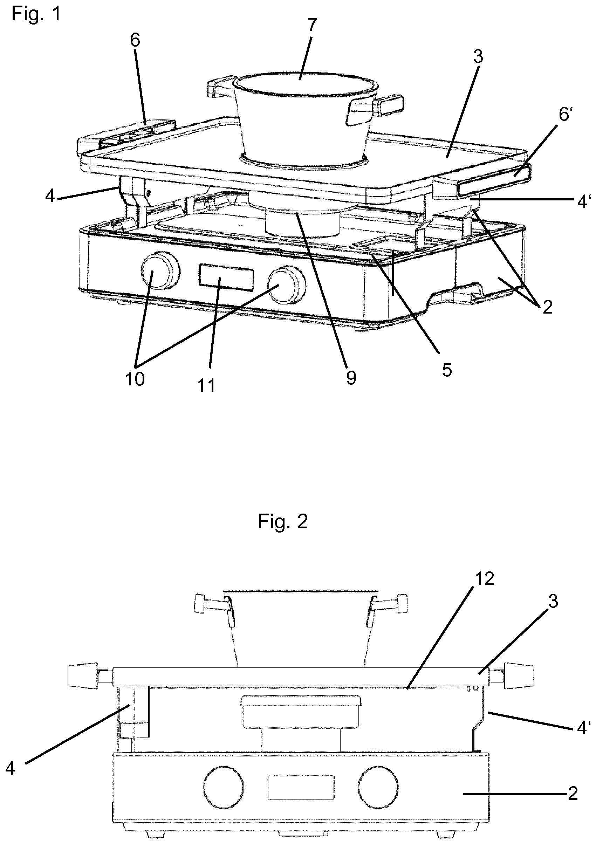

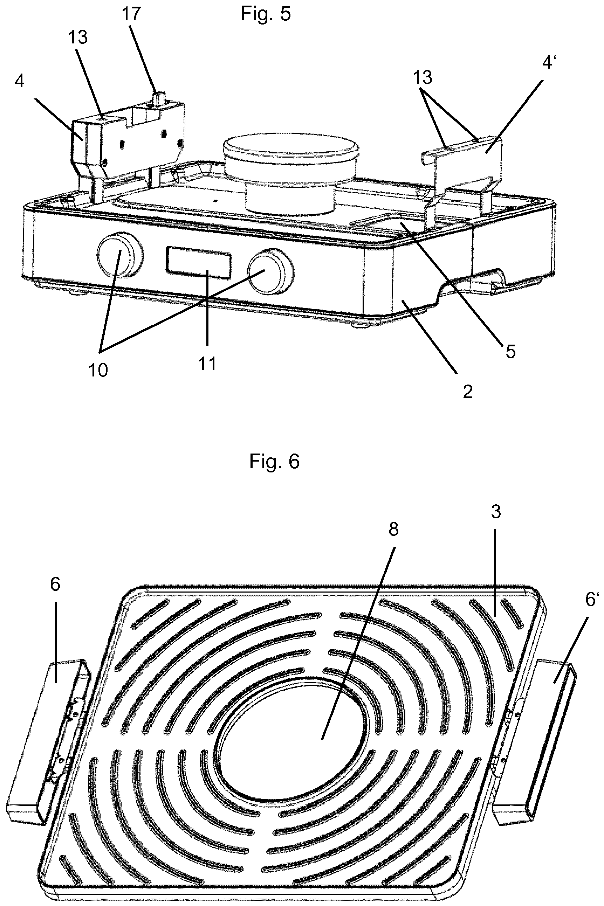

Fig.1 zeigt ein erfindungsgemäßes elektrisches Tischraclettegerät 1 mit zusätzlicher Fonduefunktion, umfassend einen Grundkörper 2 sowie eine Grillplatte 3. Die Grillplatte 3 ist mittels zweier Tragarme 4, 4' vom Grundkörper 2 beabstandet, wobei der Tragarm 4' die Form zweier senkrechter Arme aufweist, die über einen schrägen Schenkel parallelversetzt verbunden sind. Der Tragarm 4 ist mit der im Grundkörper 2 befindlichen elektrischen Steuereinheit verbunden (nicht gezeigt) und ist insgesamt größer bzw. voluminöser als Tragarm 4'. In seinem Inneren kann sich ein Thermoschutzschalter befinden, der bei Überhitzen die Stromzufuhr in die Heizwendel abschaltet (z.B. je nach Einstellung bei 180-240°C). Wird Tragarm 4 von oben betrachtet, wird der weibliche Teil eines elektrischen Steckverbinders sichtbar (siehe Fig. 5).

Die Umrissfläche der Oberseite des Grundkörpers 2 entspricht der Umrissfläche der Grillplatte 3 in Form und Flächeninhalt. Auf der Oberseite des Grundkörpers 2 sind Mulden 5 zu erkennen, welche den einzelnen Benutzern des Tischraclettegerätes 1 Einschiebepositionen für die Raclettepfannen (nicht gezeigt) zuordnen. Eine Mulde 5 für eine Raclettepfanne (nicht gezeigt) ist zwischen den Schenkeln des Tragarmes 4' zu erkennen.

Die rechteckige Grillplatte 3 weist an ihren Schmalseiten jeweils einen Handgriff 6, 6' auf. Die Grillplatte 3 kann senkrecht nach oben von den Tragarmen abgehoben werden, z.B. mit den Handgriffen 6, 6'.

Die Grillplatte 3 weist weiterhin mittig eine kreisrunde Öffnung 8 auf, in welcher sich in den Fig.1 bis 4 ein Fonduetopf 7 befindet. Der Fonduetopf 7 steht auf einer Heizplatte 9, welche aus dem Grundkörper 2 mittig leicht emporragt. Im Grundkörper kann unterhalb der Heizplatte 9 ein weiterer Thermoschutzschalter angeordnet sein, der bei Überhitzen die Stromzufuhr in die Heizplatte 9 oder sogar in die Heizplatte 9 und die Grillplatte 3 abschaltet (z.B. je nach Einstellung bei 180-240°C).

Oberseite des Grundkörpers 2, die Heizplatte 9, das Heizelement 12 und die Grillplatte 3 sind planparallel zueinander und in der angegebenen Reihenfolge übereinander angeordnet.

An der Vorderseite des Grundkörpers sind zwei Drehregler 10, 10' angebracht, welche zum einen die Temperaturregulierung des an der Unterseite der Grillplatte 3 in einer Nut befestigten Heizelementes 12 (nicht gezeigt) und der Heizplatte 9 dienen. Die eingestellte Temperatur für die Heizplatte 9 und das Heizelement 12 lassen sich auf einem Display 11 ablesen. Mit diesem Tischraclettegerät 1 ist es somit möglich, mit mehreren Personen gleichzeitig sowohl Raclette in Raclettepfannen (nicht gezeigt) zuzubereiten, Lebensmittel auf der Grillplatte 3 zu garen bzw. zu braten und gleichzeitig ein Fondue im Fonduetopf 7 zuzubereiten.

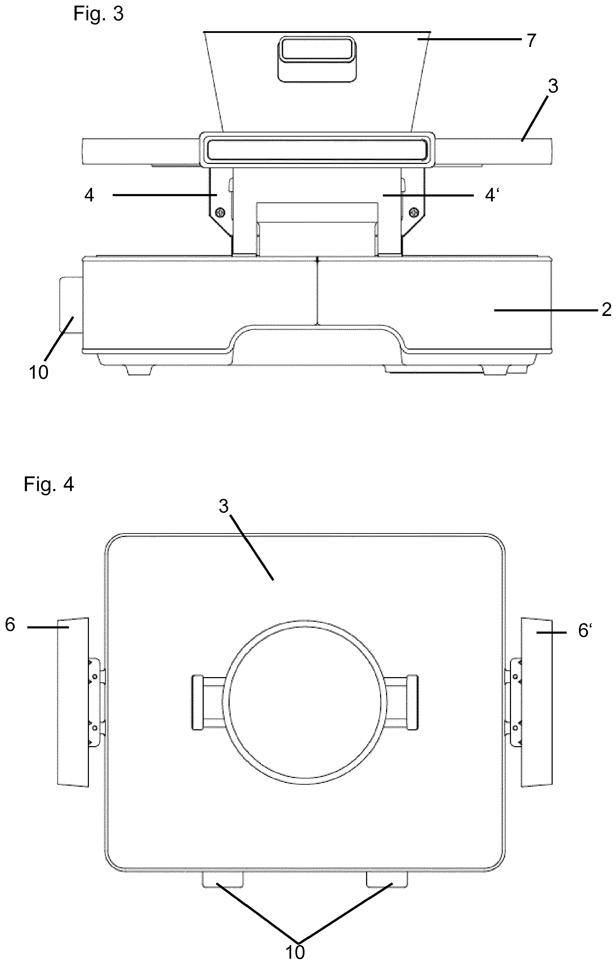

Fig. 2 zeigt die Vorderansicht und Fig. 3 zeigt die Seitenansicht des in Fig. 1 gezeigten erfindungsgemäßen Tischraclettegerätes. Es ist zu erkennen, dass der Tragarm 4, über welchen das Heizelement 12 mit Strom versorgt wird, eine größere Dimension aufweist als der Tragarm 4'.

Fig. 4 zeigt die Draufsicht auf das in Fig. 1 gezeigte erfindungsgemäße Tischraclettegerät 1. Es ist zu erkennen, dass der Fonduetopf 7 mittig in der Grillplatte 3 angeordnet ist.

Fig. 5 zeigt den Grundkörper 2 (der die Tragarmen 4, 4' einschließt) des in Fig. 1 dargestellten erfindungsgemäßen Tischraclettegerätes 1 ohne Grillplatte 3. In den Tragarmen 4, 4' sind Ausnehmungen 13 in Form von Löchern zu erkennen. Diese dienen dem Eingriff von Dornen an der Grillplatte. Im Tragarm 4 lässt sich weiterhin der weibliche Teil eines elektrischen Steckverbinders 14 (die Buchsen) erkennen. Zwischen den Schenkeln des Tragarms 4' ist eine Mulde 5 auf der Oberfläche des Grundkörpers 2 für eine weitere Raclettepfanne vorgesehen.

Fig. 6 zeigt die seitliche Draufsicht auf eine Grillplatte 3, wobei die Grillplatte 3 anders als die in Fig. 1 gezeigte Grillplatte an sich bekannte Rippen aufweist. Die Grillplatte 3 dient der Aufnahme und Erhitzung von nahezu beliebigem Brat- bzw. Grillgut.

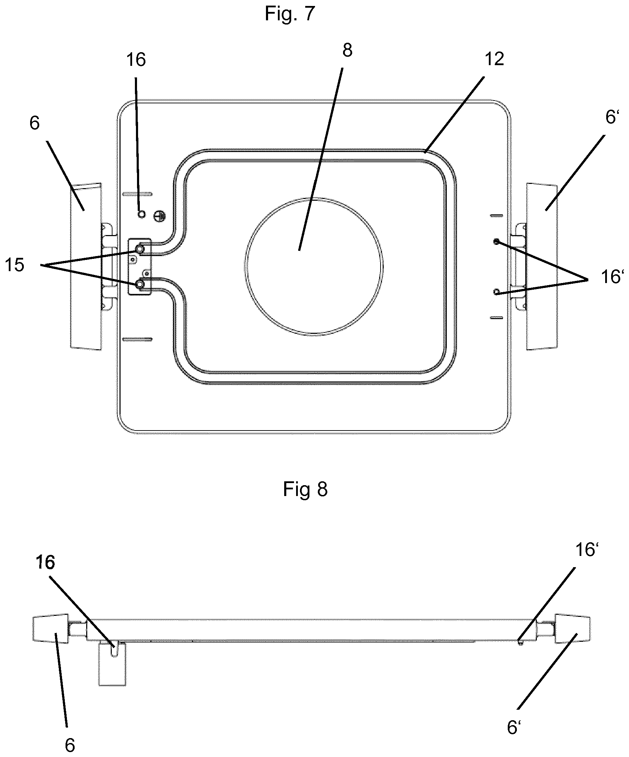

Fig. 7 zeigt die Unterseite der in Fig. 6 veranschaulichten Grillplatte 3. Auf der Unterseite ist ein Heizelement 12 in Form einer umlaufenden Heizwendel in eine in der Grillplatte 3 befindlichen Nut eingelegt. Diese Anordnung ermöglicht eine verbesserte Wärmeübertragung auf die Grillplatte 3 sowie ebenfalls eine verbesserte Wärmeabstrahlung auf die Raclettepfannen (nicht gezeigt). Das Heizelement 12 mündet in den männlichen Teil einer elektrischen Steckverbindung 15 mit einem Plus- und einem Minuspol. Der männliche Teil der elektrischen Steckverbindung 15 (Steckerstifte) hat die Form zweier Stifte, welche dafür vorgesehen sind, in Buchsen der weiblichen elektrischen Steckverbindung 14 eingeschoben zu werden. Die beiden Stifte sind von einem nach unten offenen isolierenden Kasten umgeben. Der weibliche Teil der elektrischen Steckverbindung 14 befindet sich im Tragarm 4, wobei die Öffnungen der Buchsen innerhalb des nach oben offenen Kastens nach unten versetzt im Tragarm 4 angeordnet sind.

Auf der Unterseite der Grillplatte 3 befinden sich parallel versetzt von den Handgriffen 6, 6' Führungsdorne 16, 16', welche in die dafür vorgesehenen Löcher 13 in den Tragarmen 4, 4' gesteckt werden. Die Führungsdorne 16, 16' sorgen zum einen für eine zusätzliche Stabilität der Grillplatte bei einseitiger Belastung der Grillplatte 3 und zum anderen verhindern diese ein mögliches Verkanten des männlichen Teils der elektrischen Steckverbindung 15 im weiblichen Teil der elektrischen Steckverbindung 14 beim Einsetzen von oben. Parallel versetzt zum Handgriff 6' befinden sich zwei Führungsdorne 16', welche in die Ausnehmungen 13 im Tragarm 4' gesteckt werden, wohingegen sich parallel versetzt zum Handgriff 6 und unterhalb des männlichen Teils der elektrischen Steckverbindung 15 nur ein zusätzlicher Führungsdorn 16 befindet.

Fig. 8 zeigt eine Seitenansicht auf eine Grillplatte 3. Es ist erkennbar, dass der Führungsdorn 16 länger ist als die zwei Führungsdorne 16' (nur einer erkennbar). Auch ist der nach unten offene Kasten erkennbar in dem der männliche Teil der elektrischen Steckverbindung 15 untergebracht ist.

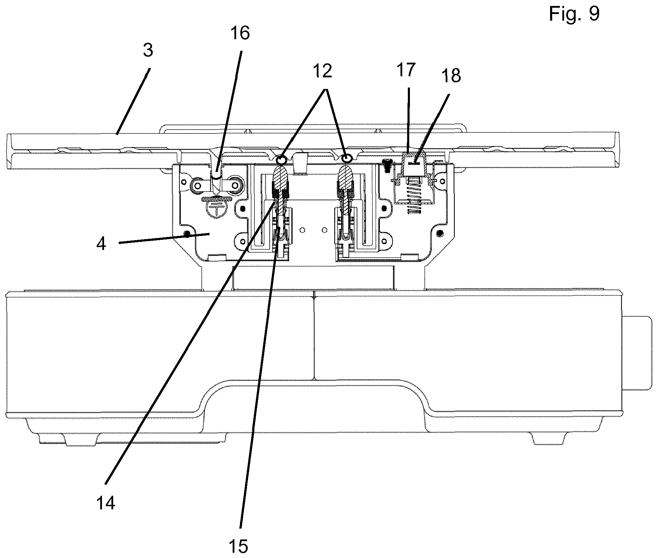

Wie die elektrischen Steckverbindung aufgebaut ist, ist in Fig. 9 ersichtlich. Die beiden Enden des Heizelements 12 laufen in Steckerstiften 15 aus, die in Buchsen 14 eingeführt sind. Der Dorn 16 wird durch zwei Rastnasen festgehalten. Der Dorn 16 dient gleichzeitig als Erdung. Der Temperaturfühler 18 ist in Form einer Federnase 17 ausgeführt, damit der für eine gute Temperaturmessung erforderliche Anpressdruck der temperaturleitenden Federnase 17 an die Grillplatte 3 gewährleitet ist.. Der Temperaturfühler 18 kann z.B. mit einem NTC ausgestattet sein.

### Bezugszeichenliste:

- 1: Tischraclettegerät
- 2: Grundkörper
- 3: Grillplatte
- 4,4': Tragarme
- 5: Mulden auf der Oberseite des Grundkörpers
- 6, 6': Handgriffe an der Grillplatte
- 7: Fonduetopf
- 8: Öffnung in der Grillplatte
- 9: Heizplatte für den Fonduetopf
- 10, 10': Drehregler / Schalter
- 11: Display
- 12: Heizelement, eingelassen in die Grillplatte / Heizwendel
- 13: Löcher / Hülse im Tragarm
- 14: Weibl. Teil des elektr. Steckverbinders / Buchse
- 15: Männl. Teil des elektr. Steckverbinders / Steckerstifte
- 16, 16': Führungsdorn
- 17: Sicherheitsschalter
- 18: Temperaturfühler

## Patentansprüche

1. Elektrisches Tischraclettegerät (1), umfassend mindestens einen Grundkörper (2) und zumindest eine darüber angeordnete Grillplatte (3) mit Heizelement (12), wobei die Grillplatte (3) über mindestens zwei Tragarme (4, 4') vom Grundkörper (2) beabstandet ist, so dass sich zwischen Grundkörper (2) und Grillplatte (3) Raclettepfannen einschieben lassen, wobei in der Grillplatte (3) oder an der Unterseite der Grillplatte (3) zumindest ein Heizelement (12) befestigt ist und die Grillplatte (3) und das/die Heizelement(e) (12) von den Tragarmen (4, 4') als eine Einheit zusammen abnehmbar sind,
wobei das oder die Heizelemente (12) mittels einer elektrischen Steckverbindung (14,15), die lösbar ist und bei Abnehmen der Grillplatte (3) unterbrochen wird, mit zumindest einem Leiter im Grundkörper (2) stromleitend verbunden ist/ sind und sich im Grundkörper zumindest ein elektrischer Schalter und die Stromzufuhr befinden.

2. Elektrisches Tischraclettegerät nach Anspruch 1, wobei das oder die Heizelemente (12) als in oder an der Unterseite der Grillplatte umlaufende Heizwendel ausgeführt sind.

3. Elektrisches Tischraclettegerät nach Anspruch 1 oder 2, wobei das oder die Heizelement(e) (12) bzw. die umlaufende(n) Heizwendel(n) in einer oder mehreren an der Unterseite der Grillplatte (3) angeordneten Nuten verlaufen.

4. Elektrisches Tischraclettegerät nach zumindest einem der vorherigen Ansprüche, wobei die elektrische Steckverbindung (14,15) über zumindest einen Tragarm mit dem zumindest einen Leiter im Grundkörper (2) stromleitend verbunden ist/sind und sich im Grundkörper zumindest eine Regeleinheit zur Temperatureinstellung befindet.

5. Elektrisches Tischraclettegerät nach Anspruch 4, wobei die elektrische Steckverbindung (14,15) Teil zumindest eines Tragarms (4) ist und die Buchsen (14) im Tragarm (4) angeordnet sind und die Steckerstifte (15) als Enden des Heizelements (12) bzw. der Heizwendel ausgeführt sind und weiter bevorzugt die Steckerstifte (15) von oben und im Wesentlichen vertikal ausgerichtet in die Buchsen (14) einführbar sind.

6. Elektrisches Tischraclettegerät nach Anspruch 4 oder 5, wobei die Stromzufuhr zur elektrischen Steckverbindung unterbrochen ist, wenn die Grillplatte (3) mit Heizelement (12) abgenommen ist, und vorzugsweise durch einen federbetätigten Sicherheitsschalter geschlossen wird, wenn der federbetätigte Sicherheitsschalter mit dem Gewicht der Grillplatte (3) belastet wird und der federbetätigte Sicherheitsschalter (17) vorzugsweise auf dem Tragarm (4) angeordnet ist.

7. Elektrisches Tischraclettegerät nach zumindest einem der vorherigen Ansprüche, wobei die Grillplatte (3) in horizontaler Ausrichtung nach oben von dem Grundkörper (2) abnehmbar ist, wobei insbesondere die Grillplatte (3) rechtwinkelig von der Grillplatte (2) nach unten abstehende Steckerstifte (15) aufweist.

8. Elektrisches Tischraclettegerät nach einem der vorherigen Ansprüche, wobei der Grundkörper (2) auf seiner Oberfläche Mulden (5) zum Anordnen der Raclettepfannen aufweist.

9. Elektrisches Tischraclettegerät nach einem der vorherigen Ansprüche, wobei die Tragarme (4, 4') jeweils zumindest eine Öffnung (13) aufweisen, in welche zumindest ein an der Grillplatte (3) befindlicher Dorn (16, 16') eingreift.

10. Elektrisches Tischraclettegerät nach zumindest einem der vorherigen Ansprüche, wobei der Grundkörper (2) weiterhin eine Heizplatte (9) für einen Fonduetopf (7) aufweist und wobei die Grillplatte (3) eine Öffnung (8) für einen Fonduetopf (7) über der Heizplatte (9) aufweist.

11. Elektrisches Tischraclettegerät nach Anspruch 10, wobei die Öffnung (8) den Fonduetopf (7) auf der Heizplatte (9) zumindest seitlich fixiert.

12. Elektrisches Tischraclettegerät nach Anspruch 10 oder 11, wobei sich die Heizplatte (9) und das Heizelement (12) unabhängig voneinander geschaltet, insbesondere hinsichtlich ihrer Temperatur regulieren lassen, z.B. über Drehregler (10, 10'), und vorzugsweise die jeweilige Temperatur auf einem Display (11) dargestellt wird.

## Claims

1. An electric tabletop raclette device (1), comprising at least one main body (2) and at least one grill plate (3) arranged above it with a heating element (12), wherein the grill plate (3) is spaced apart from the main body (2) by at least two support arms (4, 4') such that raclette pans can be slid between the main body (2) and the grill plate (3), wherein at least one heating element (12) is fastened in the grill plate (3) or on the underside of the grill plate (3), and the grill plate (3) and the heating element(s) (12) can be removed from the support arms (4, 4') together as a unit,
wherein the heating element(s) (12) is/are connected in a current-conducting manner to at least one conductor in the main body (2) by means of an electric plug connection (14, 15) which is releasable and is interrupted when the grill plate (3) is removed, and at least one electric switch and the power supply are located in the main body.

2. The electric tabletop raclette device according to claim 1, wherein the heating element(s) (12) is/are designed as a heating coil running circumferentially in or on the underside of the grill plate.

3. The electric tabletop raclette device according to claim 1 or 2, wherein the heating element(s) (12) or the circumferential heating coil(s) runs/run in one or more grooves arranged on the underside of the grill plate (3).

4. The electric tabletop raclette device according to at least one of the preceding claims, wherein the electric plug connection (14, 15) is/are connected in a current-conducting manner via at least one support arm to the at least one conductor in the main body (2) and at least one control unit for setting the temperature is located in the main body.

5. The electric tabletop raclette device according to claim 4, wherein the electric plug connection (14, 15) is part of at least one support arm (4) and the sockets (14) are arranged in the support arm (4) and the plug pins (15) are designed as ends of the heating element (12) or the heating coil, and more preferably the plug pins (15) can be inserted into the sockets (14) from above and aligned basically vertically.

6. The electric tabletop raclette device according to claim 4 or 5, wherein the power supply to the electric plug connection is interrupted when the grill plate (3) with the heating element (12) is removed, and preferably is closed by a spring-operated safety switch when the spring-operated safety switch is loaded with the weight of the grill plate (3) and the spring-operated safety switch (17) is preferably arranged on the support arm (4).

7. The electric tabletop raclette device according to at least one of the preceding claims, wherein the grill plate (3) can be removed from the main body (2) upwards in a horizontal alignment, wherein in particular the grill plate (3) has plug pins (15) protruding downwards at a right angle from the grill plate (2).

8. The electric tabletop raclette device according to one of the preceding claims, wherein the main body (2) has depressions (5) on its surface for arranging the raclette pans.

9. The electric tabletop raclette device according to one of the preceding claims, wherein the support arms (4, 4') each have at least one opening (13), into which at least one spike (16, 16') located on the grill plate (3) engages.

10. The electric tabletop raclette device according to at least one of the preceding claims, wherein the main body (2) also has a heating plate (9) for a fondue pot (7) and wherein the grill plate (3) has an opening (8) for a fondue pot (7) above the heating plate (9).

11. The electric tabletop raclette device according to claim 10, wherein the opening (8) at least laterally fixes the fondue pot (7) on the heating plate (9).

12. The electric tabletop raclette device according to claim 10 or 11, wherein the heating plate (9) and the heating element (12), being switched independently of one another, in particular can be controlled regarding their temperature, for example using rotary controls (10, 10'), and preferably the respective temperature is shown on a display (11).

## Revendications

1. Appareil à raclette de table électrique (1), comportant au moins un corps de base (2) et au moins une plaque de gril (3) disposée au-dessus avec élément chauffant (12), la plaque de gril (3) étant espacée du corps de base (2) par l'intermédiaire d'au moins deux bras de support (4, 4'), de telle sorte que des poêles à raclette peuvent être introduites entre le corps de base (2) et la plaque de gril (3), au moins un élément chauffant (12) étant fixé dans la plaque de gril (3) ou sur la surface inférieure de la plaque de gril (3) et la plaque de gril (3) et le/les éléments chauffants (12) étant apte(s) à être retiré(s) ensemble des bras de support (4, 4') en tant qu'une unité,
le ou les éléments chauffants (12) étant relié(s) de façon conductrice de courant avec au moins un conducteur dans le corps de base (2) au moyen d'un connecteur électrique enfichable (14, 15), qui est amovible et est coupé lors du retrait de la plaque de gril (3), et au moins un commutateur électrique et l'alimentation en courant se trouvant dans le corps de base.

2. Appareil à raclette de table électrique selon la revendication 1, dans lequel le ou les éléments chauffants (12) est ou sont réalisé(s) en tant que filament chauffant s'étendant tout autour dans ou sur la surface inférieure de la plaque de gril.

3. Appareil à raclette de table électrique selon l'une des revendications 1 ou 2, dans lequel le ou les éléments chauffants (12) ou le ou les filaments chauffants s'étendant tout autour s'étendent dans une ou plusieurs rainures disposées sur la surface inférieure de la plaque de gril (3).

4. Appareil à raclette de table électrique selon au moins l'une des revendications précédentes, dans lequel le connecteur électrique enfichable (14, 15) est relié de façon conductrice de courant avec ledit au moins un conducteur dans le corps de base (2) par l'intermédiaire d'au moins un bras de support, et au moins une unité de réglage pour le réglage de la température se trouve dans le corps de base.

5. Appareil à raclette de table électrique selon la revendication 4, dans lequel le connecteur électrique enfichable (14, 15) fait partie d'au moins un bras de support (4) et les douilles (14) sont disposées dans le bras de support (4) et les broches d'enfichage (15) sont réalisées en tant qu'extrémités de l'élément chauffant (12) ou du filament chauffant et de manière davantage préférée les broches d'enfichage (15) sont aptes à être introduites dans les douilles (14) par le haut et orientées sensiblement verticalement.

6. Appareil à raclette de table électrique selon l'une des revendications 4 ou 5, dans lequel l'alimentation en courant au connecteur électrique enfichable est coupée lorsque la plaque de gril (3) avec élément chauffant (12) est retirée, et de préférence est fermée par un commutateur de sécurité actionné par ressort lorsque le commutateur de sécurité actionné par ressort est chargé avec le poids de la plaque de gril (3) et le commutateur de sécurité actionné par ressort (17) est disposé de préférence sur le bras de support (4).

7. Appareil à raclette de table électrique selon au moins l'une des revendications précédentes, dans lequel la plaque de gril (3) est apte à être retirée du corps de base (2) vers le haut dans une orientation horizontale, en particulier la plaque de gril (3) présentant des broches d'enfichage (15) faisant saillie vers le bas à angle droit de la plaque de gril (2).

8. Appareil à raclette de table électrique selon l'une des revendications précédentes, dans lequel le corps de base (2) présente des renfoncements (5) sur sa surface pour la disposition des poêles à raclette.

9. Appareil à raclette de table électrique selon l'une des revendications précédentes, dans lequel les bras de support (4, 4') présentent chacun au moins une ouverture (13), dans laquelle s'engage au moins une broche (16, 16') se trouvant sur la plaque de gril (3).

10. Appareil à raclette de table électrique selon l'une des revendications précédentes, dans lequel le corps de base (2) présente en outre une plaque chauffante (9) pour un caquelon à fondue (7) et dans lequel la plaque de gril (3) présente une ouverture (8) pour un caquelon à fondue (7) au-dessus de la plaque chauffante (9).

11. Appareil à raclette de table électrique selon la revendication 10, dans lequel l'ouverture (8) fixe au moins latéralement le caquelon à fondue (7) sur la plaque chauffante (9).

12. Appareil à raclette de table électrique selon l'une des revendications 10 ou 11, dans lequel la plaque chauffante (9) et l'élément chauffant (12) montés indépendamment l'un de l'autre peuvent être régulés, en particulier en ce qui concerne leur température, par exemple par l'intermédiaire d'un régulateur rotatif (10, 10'), et de préférence la température respective est représentée sur un dispositif d'affichage (11).
